Europäisches Patentamt

European Patent Office

Office européen des brevets

(11) Numéro de publication: **0 181 905 B1**

(12) **FASCICULE DE BREVET EUROPEEN PUBLI E EN APPLICATION DE L'article 158, paragraphe 3 de la CH0**

(45) Date de publication de fascicule du brevet:
**20.02.91**

(21) Numéro de dépôt: **85902563.7**

(22) Date de dépôt: **24.05.85**

(86) Numéro de dépôt internationale :
**PCT/FR85/00128**

(87) Numéro de publication internationale :
**WO 85/05480 (05.12.85 85/26)**

(51) Int. Cl.⁵: **G09B 21/00**

(54) **DISPOSITIF DE LECTURE TACTILE.**

(30) Priorité: **24.05.84 FR 8408143**

(43) Date de publication de la demande:
**28.05.86 Bulletin 86/22**

(45) Mention de la délivrance du brevet:
**20.02.91 Bulletin 91/08**

(84) Etats contractants désignés:
**AT BE CH DE FR GB IT LI LU NL SE**

(56) Documents cités:
**DE-A- 3 035 852**
**FR-A- 1 087 456**
**FR-A- 2 463 466**
**GB-A- 2 002 564**
**US-A- 4 283 178**

(73) Titulaire: **TRETIAKOFF, Oleg**
**16, route de Grasse**
**F-06780 St Cézaire(FR)**

Titulaire: **TRETIAKOFF, Andrée**
**16, route de Grasse**
**F-06780 St Cézaire(FR)**

(72) Inventeur: **TRETIAKOFF, Oleg**
**16, route de Grasse**
**F-06780 St Cézaire(FR)**
Inventeur: **TRETIAKOFF, Andrée**
**16, route de Grasse**
**F-06780 St Cézaire(FR)**

(74) Mandataire: **Levesque, Denys et al**
**Cabinet Beau de Loménie 55, rue d'Amsterdam**
**F-75008 Paris(FR)**

IBM Technical Disclosure Bulletin, vol. 17, no. 12, 12 May 1975 (New York,US), pp. 3733-3735, E.G. Nassimbene: "Digital Display for the Blind"

## Description

La présente invention se rapporte à des dispositifs de lecture tactile du type présentant une surface de lecture pourvue d'ouvertures pour un certain nombre de tiges tactiles montées en coulissement axial en va-et-vient entre une position en saillie et une position rétractée par rapport à ladite surface et qui sont chacune déplaçables entre lesdites positions au moyen d'une extrémité d'un élément d'actionnement de forme allongée dont l'autre extrémité est fixée, ledit élément étant capable d'un certain déplacement par déformation de courbure perpendiculairement à son axe longitudinal entre deux positions extrêmes par application d'une force de commande à ce dernier, la direction de déformation par courbure dudit élément d'actionnement étant pratiquement perpendiculaire à la direction de déplacement de la tige tactile.

Dans les dispositifs connus de ce genre, on utilise des éléments piézo-électriques pour actionner les tiges tactiles. Un exemple typique de l'art antérieur est représenté par le brevet US-A-4 283 178, dans lequel les éléments piézo-électriques sont arrangés à la perpendiculaire par rapport aux tiges tactiles et se déforment par courbure dans la direction axiale des tiges tactiles. Un inconvénient important de ce type d'arrangement réside dans le fait que la pression appliquée aux tiges tactiles en saillie par le doigt du lecteur doit être compensée en appliquant un supplément d'énergie électrique aux éléments piézo-électriques, par rapport à l'énergie qui serait nécessaire pour maintenir uniquement les tiges tactiles dans la position en saillie. On comprendra qu'il est nécessaire pour le lecteur d'appliquer une certaine pression minimale sur les tiges tactiles par l'intermédiaire de ses doigts pour être capable de déterminer le caractère représenté par le motif des tiges tactiles en saillie .

Dans un autre dispositif connu, représenté dans le brevet français FR-A-2 399 555, chaque tige tactile est commandée au moyen de deux éléments piézo-électriques s'étendant parallèlement à l'axe de la tige tactile et disposés de part et d'autre de cet axe, et dont les extrémités libres sont reliées à la tige tactile au moyen de biellettes. Dans cet arrangement, on applique l'énergie électrique aux éléments piézo-électriques uniquement sous la forme d'impulsions de courte durée pour basculer la tige tactile depuis la position en saillie vers la position rétractée ou vice-versa. Ainsi, les éléments piézo-électriques doivent présenter une raideur mécanique suffisante de manière à garantir la "pression de lecture" nécessaire lorsque les tiges en saillie sont touchées par le doigt du lecteur. Cependant, au cas où par accident une force trop importante est appliquée aux extrémités des tiges tactiles en saillie, celles-ci pourraient être ramenées en position rétractée et provoquer un fonctionnement erroné du dispositif, dans la mesure où il n'est pas prévu de moyens pour indiquer aux circuits électroniques de commande si une tige tactile est en position en saillie ou en position rétractée.

Un dispositif analogue, décrit dans le document FR-A-2 463 466, présente le même inconvénient. Dans ce dispositif, qui comprend des tiges tactiles dont chacune est commandée, par l'intermédiaire d'un élément en forme de coin, par une lame piézo-électrique s'étendant parallèlement à la tige, une tige tactile amenée en saillie par la déformation de la lame s'effacera de façon indésirable sous le doigt du lecteur si celui-ci exerce une pression excessive.

Le but de la présente invention est de pallier les inconvénients mentionnés ci-dessus des appareils connus de l'art antérieur, en proposant un dispositif de lecture tactile dans lequel le déplacement vers l'intérieur des tiges tactiles sous la pression appliquée par le doigt du lecteur est empêché, de manière positive, sans qu'il soit besoin d'appliquer une énergie de commande supplémentaire aux éléments de commande pour s'opposer à la pression de lecture.

Un dispositif de lecture tactile selon la présente invention est caractérisé par le fait que des moyens transmetteurs de déplacement sont prévus entre l'élément d'actionnement et la tige tactile, lesdits moyens transmetteurs de déplacement présentant un point sensiblement neutre au voisinage de celle des positions extrêmes de l'élément d'actionnement dans laquelle la tige tactile est en position en saillie. Une butée peut être prévue pour empêcher la courbure de l'élément d'actionnement au delà de ladite position d'extrémité précitée.

Lorsqu'on utilise des éléments d'actionnement piézo-électriques, l'invention permet une réduction importante du volume des éléments, dans la mesure où l'énergie électrique que l'on doit stocker à l'intérieur de ceux-ci en fonctionnement est très inférieure à celle qui est nécessaire dans les dispositifs précédemment connus. A titre d'exemple, les éléments piézo-électriques utilisés dans le dispositif conforme au brevet US-A-4 283 178 ont un volume d'environ 140 mm$^3$, tandis que dans un dispositif selon la présente invention les éléments piézo-électriques peuvent avoir un volume inférieur à 25 mm$^3$.

Dans une forme de réalisation de l'invention, l'axe longitudinal de l'élément d'actionnement est parallèle à la surface de lecture ; dans une autre forme de réalisation, l'axe longitudinal de l'élément d'actionnement est perpendiculaire à la surface de lecture. Cette dernière forme de réalisation présente l'avantage de permettre la construction d'un dispositif comportant autant de lignes de caractè-

3

res que l'on désire placées côte à côte.

Conformément à l'invention, lesdits moyens de transmission de déplacement comprennent de préférence un élément élastique.

Conformément à une autre caractéristique de l'invention, lesdits moyens de transmission de déplacement ont la forme d'un élément de liaison dont les extrémités sont reliées à l'élément d'actionnement et à la tige tactile respectivement, et monte à pivotement autour d'axes qui sont substantiellement perpendiculaires aux directions de déplacement de la tige tactile et de l'élément d'actionnement.

Dans une forme de réalisation de l'invention, ledit élément de liaison a la forme d'un ressort à fil présentant des parties d'extrémité rectilignes parallèles et reçues à rotation dans ladite tige tactile et dans ledit élément d'actionnement respectivement.

L'invention sera maintenant décrite en détail ci-après, en se référant aux dessins annexés, dans lesquels :

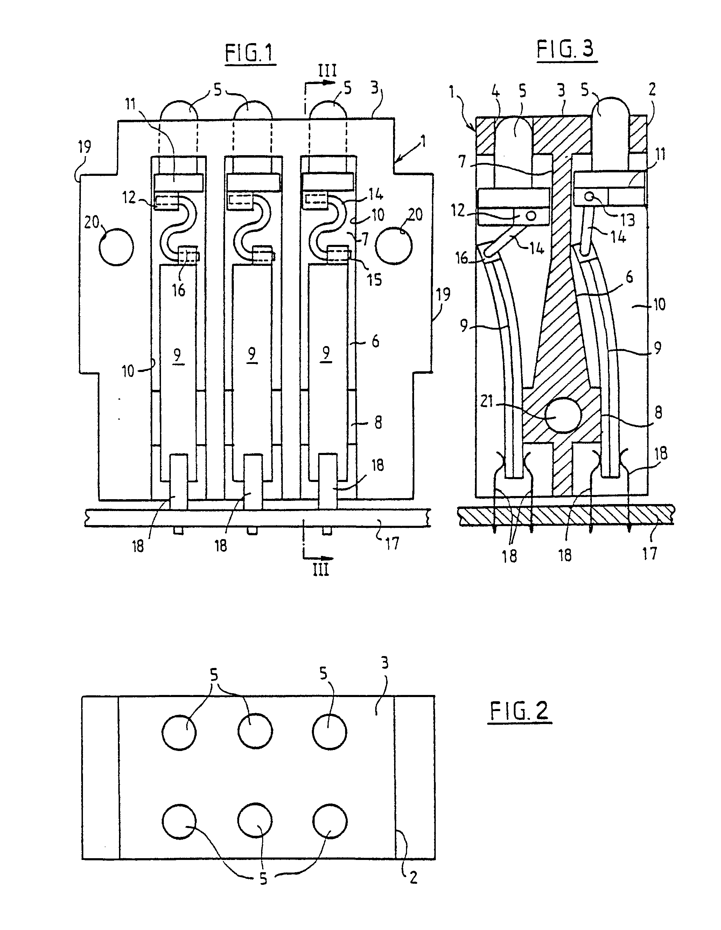

- " la figure 1 est une vue latérale d'un dispositif de lecture conforme à un mode de réalisation de l'invention;

- " la figure 2 est une vue de dessus du dispositif de la figure 1;

- " la figure 3 est une vue en coupe du dispositif de la figure 1, prise suivant la ligne III-III;

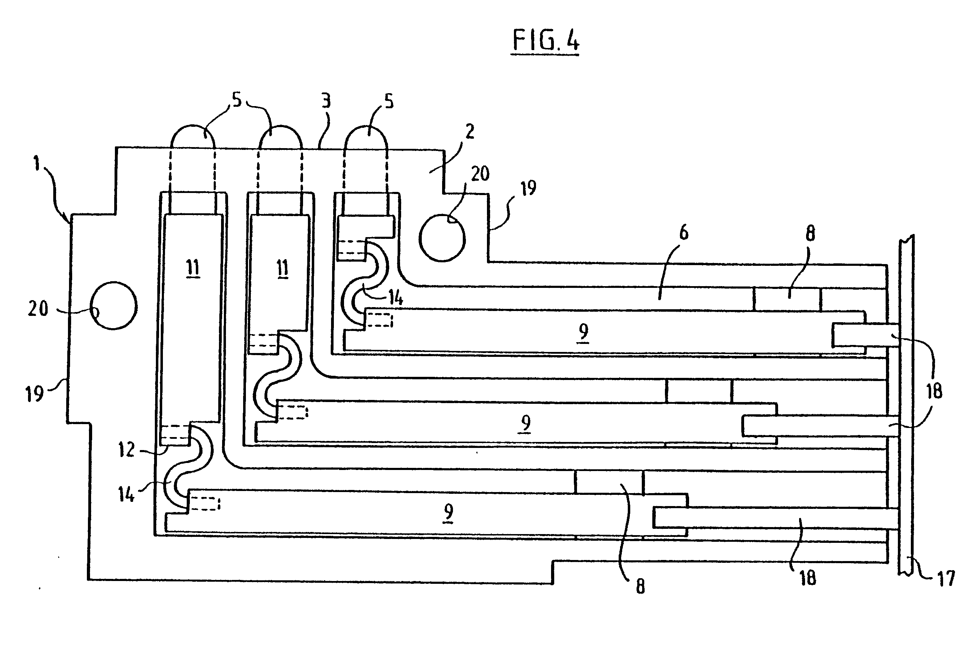

- " la figure 4 est une vue latérale d'un dispositif de lecture selon une autre forme de réalisation de l'invention; et

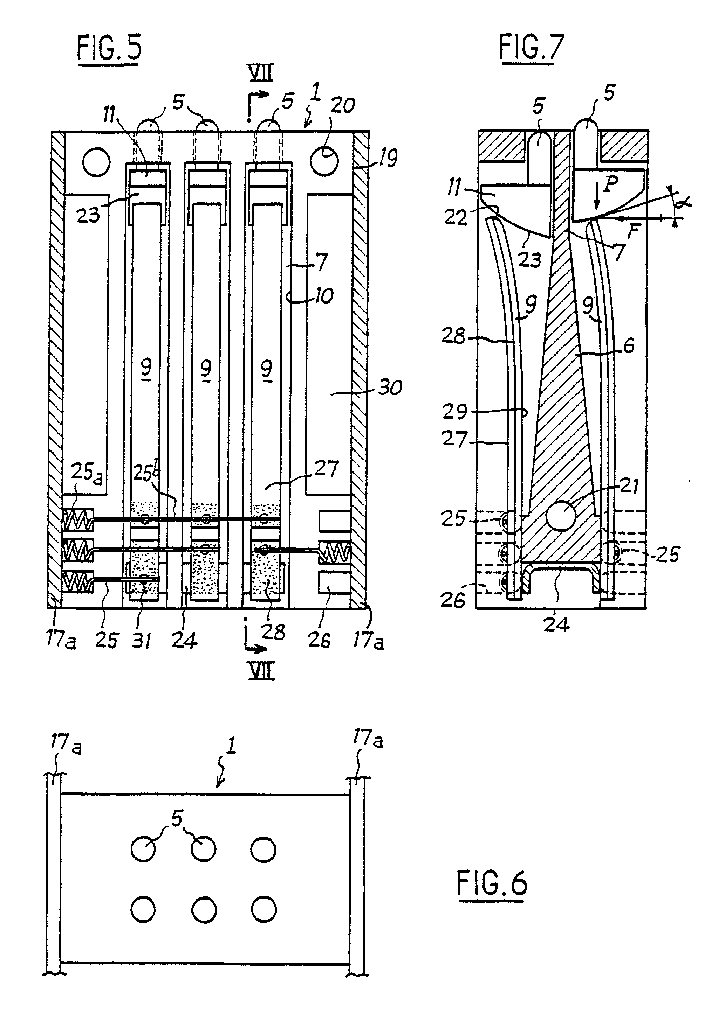

- " les figures 5 à 7 représentent, à la manière des figures 1 à 3, une variante de réalisation.

Si l'on considère le mode de réalisation illustre aux figures 1 à 3, le dispositif de lecture comprend un support 1 présentant une partie supérieure 2 avec une surface supérieure plane 3 constituant la surface de lecture du dispositif. La partie supérieure 2 est pourvue d'ouvertures 4 (figure 3) pour six tiges tactiles 5 qui, comme représenté à la figure 2, sont arrangées suivant deux rangées parallèles de trois tiges dans chaque rangée et qui sont axialement mobiles dans les ouvertures 4 entre une position rétractée représentée à la partie gauche de la figure 3 et une position en saillie représentée à la partie droite de la figure 3, dans laquelle l'extrémité arrondie extérieure de la tige tactile 5 dépasse au-dessus de la surface de lecture 3.

Le support 1 comporte une partie centrale 6 formant, au voisinage de la partie supérieure 2, une paroi de séparation 7 entre les deux rangées de tiges tactiles 5. Au voisinage de son extrémité inférieure, la partie centrale 6 présente une partie formant épaulement 8 ayant une épaisseur notablement supérieure à celle de la paroi de séparation 7. En coupe, la partie centrale est inclinée vers le haut depuis la partie formant épaulement 8 jusqu'à la paroi de séparation 7. De part et d'autre de la partie formant épaulement 8 sont montées les extrémités inférieures de six éléments piézoélectriques 9 placés chacun au-dessous d'une tige tactile 5. Les éléments 9 peuvent être fixés à la partie formant épaulement 8 par collage ou de toute autre manière convenable.

A ce point, on notera que, sur les dessins, la longueur des éléments 9 a été considérablement réduite de manière à illustrer le plus clairement possible les principes de la présente invention. Ainsi, dans les figures 1 et 3, les parties supérieure et inférieure des dispositifs sont représentées à l'échelle, tandis que la partie intermédiaire contenant la partie tronconique de la partie centrale 6 a été comprimée dans la direction verticale.

Pour chacune des tiges tactiles 5 et l'élément correspondant 9, il est prévu une ouverture rectangulaire correspondante verticale 10 dans le côté du support 1. Chaque tige tactile cylindrique 5 comporte une embase rectangulaire 11, montée coulissante dans la partie supérieure de ladite ouverture rectangulaire 10. A la partie inférieure de ladite partie rectangulaire 11, il est prévu un palier de pivot 12, du côté de la paroi de séparation 7, pour recevoir une partie d'extrémité rectiligne d'un ressort à fil en forme de S 14, l'autre portion d'extrémité rectiligne 15, qui est parallèle à la première portion 13 est montée à pivotement dans un palier 16 monté à l'extrémité supérieure de l'élément 9.

Une plaque de circuit imprimé 17 pour les conposants électroniques (non représentés) nécessaires pour le fonctionnement du dispositif de lecture comporte des paires de contacts élastiques 18, chaque paire enserrant la partie inférieure d'un des éléments 9 pour appliquer une tension de fonctionnement sur les faces opposées de l'élément 9. Lorsque la polarité de la tension appliquée est telle qu'elle provoque la courbure des éléments 9 dans la direction qui correspond à l'éloignement de la paroi intermédiaire 7 comme représenté à la partie gauche de la figure 3, la tige tactile correspondante est tirée vers 1e bas vers la position représentée sous l'action de la liaison élastique représentée par l'élément de ressort à fil 14. Si la polarité de la tension est inversée, de telle manière que l'élément 9 se déforme par courbure en direction de la paroi de séparation 7, comme représenté à la partie droite de la figure 3, la tige tactile 5 est repoussée vers le haut dans sa position en saillie.

Le ressort à fil 14 et l'élément 9 forment une paire de biellettes présentant une position neutre dans laquelle les extrémités 13 et 15 du ressort 14 et le centre de courbure de l'élément 9 au niveau de l'épaulement 8 sont disposés dans le même plan. Cete position est dépassée lorsque la tige tactile est amenée dans sa position en saillie comme représenté à la partie droite de la figure 3 et de plus, le palier 16 à l'extrémité de l'élément 9 vient en butée contre la paroi 7, de telle sorte qu'une pression appliquée vers le bas sur la tige 5 aura tendance à appliquer de plus en plus fort le palier 16 contre la paroi 7. Cette pression, toutefois, est encaissée largement par le ressort 14. Grâce à cet arrangement, il n est pas besoin d'appliquer une énergie électrique supplé mentaire aux éléments 9 pour tenir compte et compenser la pression de lecture appliquée sur les tiges tactiles 5.

Les parois d'extrémité 19 du support 1 qui s'étendent perpendiculairement à la paroi de séparation 7 sont pourvues d'ouvertures 20 pour recevoir des barres de liaison en vue de fixer ensemble un certain nombre d'unités de "caractères" côte à côte pour former une ligne de caractères. De manière similaire, la partie formant épaulement 8 comporte une ouverture 21 dirigée perpendiculairement aux ouvertures 20 pour faciliter le rassemblement en alignement par rangée d'unités de caractères en introduisant une barre de liaison au travers de ces dernières ouvertures.

Le mode de réalisation représenté aux figures 1 à 3 permet de disposer plusieurs lignes de caractères côte à côte et à faible distance, pour former une page de caractères Braille. Il est également possible, en arrangeant les tiges tactiles à espacement constant, tant verticalement qu'horizontalement, de constituer une matrice formée de tiges tactiles suivant une disposition régulière pour afficher des graphismes qui peuvent être reconnus au toucher.

Le mode de réalisation représenté à la figure 4 diffère du mode de réalisation décrit précédemment essentiellement par le fait que les éléments piézo-électriques 9 sont montés perpendiculairement à l'axe des tiges 5, c'est-à-dire parallèlement à la surface de lecture 3. Les composants ou parties qui sont identiques à ceux du mode de réalisation des figures 1 à 3 ont été désignés par les mêmes numéros de référence. Le ressort en fil en forme de S 14 constituant l'élément de liaison entre chaque élément 9 et la tige tactile correspondante 5 est montée pivotant dans un palier à sa partie supérieure prévu à la partie inférieure de l'embase 11 de la tige tactile 5 d'une manière similaire à ce qui a été décrit en relation avec le premier mode de réalisation, tandis que la partie inférieure du ressort est reliée à l'élément 9 au moyen d'un palier s'étendant la direction longitudinale de l'élément 9. Le fonctionnement du mode de réalisation illustré à la figure 4 est le même que celui du mode de réalisation illustré aux figures 1 à 3.

Bien que l'étendue, prise dans le sens horizontal, des éléments 9 du dispositif de la figure 4 empêche la réalisation de dispositifs ayant plus de deux lignes d'affichage contiguës, il présente l'avantage que l'encombrement vertical est très réduit, permettant la réalisation d'appareils "de poche" de faible épaisseur. La disposition horizontale des éléments 9 permet en outre l'utilisation d'éléments de très grande longueur qui peuvent être commandés sous basse tension et permettant la réalisation d'appareils de lecture Braille "de poche" et alimentées par piles ou batterie.

On comprendra que les éléments 9 peuvent être placés sous n'importe quel angle par rapport à la surface de lecture 3 entre la position perpendiculaire du premier mode de réalisation et la position parallèle du second mode de réalisation.

On peut également prévoir diverses modifications au mode de réalisation décrit :

- " on peut utiliser des éléments de liaison rigides en lieu et place du ressort à fil 14, et l'élasticité nécessaire étant assurée soit directement par le matériau constituant la tige tactile 5, soit au moyen d'un élément séparé incorporé entre la tige 5 et l'élément de liaison 14 ;

- " on peut utiliser d'autres éléments d'actionnement en lieu et place des éléments piézo-électriques 9, comme par exemple des électrets, ou des composants réalisés en matériaux magnétostrictifs.

Les moyens transmetteurs de déplacement entre l'élément d'actionnement 9 et la tige tactile 5, n'ont pas besoin d'être réalisés sous la forme d'une biellette du type du ressort 14. En variante, la sous-face de l'embase 11 de la tige tactile 5 peut être conformée à la manière d'une surface de came coopérant directement avec l'extrémité libre de l'élément d'actionnement 9 ou de tout autre élément d'actionnement. Une telle surface de came pourrait présenter une première surface longue inclinée dans une première direction et reliée à une seconde surface courte inclinée dans l'autre direction avec une zone de transition entre les deux surfaces et correspondant au point neutre décrit ci-dessus en se rapportant au premier mode de réalisation des figures 1 à 3. Selon une autre possibilité, cette surface de came peut être réalisée sous la forme d'un ressort à lame fixé en sous-face de la tige tactile 5, et qui procurerait l'élasticité désirée à l'encontre de la pression de lecture.

A titre d'exemple, les figures 5, 6 et 7 représentent une variante mettant en oeuvre une transmission de déplacement par surface de came. On voit que la face inférieure de l'embase 11 de la tige tactile 5 coopère directement avec l'extrémité libre de l'élément d'actionnement 9. Cette extrémité libre comporte une partie arrondie 22 qui peut glisser sur la surface de came 23 qu'offre sur sa face inférieure l'embase 11 de la tige tactile 5, de façon que cette dernière soit repoussée vers le haut lorsque l'élément d'actionnement 9 s'incurve vers la paroi intermédiaire 7, et que la tige tactile 5 descende sous l'effet de son propre poids lorsque l'élément d'actionnement 9 s'incurve en sens opposé.

Une force P appliquée vers le bas sur la tige tactile 5 sera équilibrée par une force de flexion horizontale F appliquée sur la surface de came 23 par l'élément d'actionnement 9. Si l'on appelle $\alpha$ l'angle que fait avec le plan horizontal, perpendiculaire à la direction de déplacement de la tige 5, la tangente à la surface de came 23 au point de contact avec la partie arrondie 22 de l'extrémité libre de l'élément d'actionnement 9, l'équilibre sera obtenu si

$$F = (tg\ \alpha - f)\ P\ /\ (1 + f\ tg\ \alpha)$$

f étant le coefficient de frottement en glissement de la surface 22 sur la surface 23.

Si la pente tg $\alpha$ de la surface de came 23 est inférieure au coefficient de frottement f, il y aura arc-boutement de l'embase 11 de la tige tactile 5 sur l'élément d'actionnement 9. Si au contraire la pente tg $\alpha$ de la surface de came 23 est supérieure au coefficient de frottement f, il y aura flexion de l'élément d'actionnement 9 jusqu'à ce que la force de flexion F atteigne une valeur telle que l'équilibre soit réalisé. Si la pente tg $\alpha$ de la surface de came 23 n'est que légèrement supérieure au coefficient de frottement f, une faible force de flexion suffira à équilibrer une pression relativement importante sur la tige tactile 5.

Par exemple, si tg $\alpha$ = 0,5 et f = 0,4, l'équilibre sera obtenu si

$$F = 0,1\ P\ /\ 1,2\ .$$

Une force de flexion de 1 gramme exercée par l'élément d'actionnement 9 suffira donc pour équilibrer une force de 12 grammes exercée sur la tige tactile 5.

L'élasticité désirée à l'encontre de la pression de lecture peut ainsi être obtenue par la forme donnée à la surface de came 23 sans qu'il soit besoin d'employer des matériaux élastiques pour réaliser l'ensemble constitué par la tire tactile 5 et son embase 11.

Les figures 5, 6 et 7 représentent également une variante dans la façon d'alimenter en courant électrique les éléments d'actionnement 9, lorsque ceux-ci sont constitués par des éléments piézoélectriques bimorphes.

Le support 1 est enserré entre deux circuits imprimés I7a qui s'appuient sur les faces laté rales 19 du support 1. Ces circuits imprimés portent des composants électroniques qui permettent d'appliquer sélectivement les tensions électriques nécessaires au fonctionnement des éléments piézo-électriques 9. Ces composants électroniques trouvent place dans des évidements rectangulaires 30 ménagés dans les faces latérales 19 du support 1.

Les tensions électriques sont transmises des circuits imprimés I7a aux éléments d'actionnement 9 par l'intermédiaire de ressorts de contact 25 qui comportent une partie hélicoidale 25a insérée dans des alvéoles 26 ménagées dans les faces latérales I9 du support 1 de façon à réaliser un contact électrique élastique avec les circuits inprimés 17a, et une partie rectiligne 25b connectée respectivement aux électrodes extérieures 27 ou aux électrodes médianes 28 des éléments d'actionnement piézo-électriques 9. Cette connexion peut être réalisée par une soudure 31. Les éléments d'actionnement 9 sont fixés par leur électrode interne 29 à une griffe métallique 24 en forme de U, elle-même fixée convenablement sur la face inférieure du support 1.

## Revendications

1. Dispositif de lecture tactile, comportant une surface de lecture (3) pourvue d'ouvertures (4) pour un certain nombre de tiges tactiles (5) susceptibles de se déplacer axialement en va-et-vient entre une position en saillie et une position rétractée par rapport à ladite surface et qui peuvent être déplacées chacune entre lesdites positions à l'aide d'une extrémité d'un élément d'actionnement (9) de forme allongée dont l'autre extrémité est fixée, ledit élément d'actionnement (9) étant prévu pour se déplacer par déformation de courbure perpendiculairement à son axe longitudinal entre deux positions extrêmes par application d'une force d'actionnement à celui-ci, la direction de déformation par courbure dudit élément d'actionnement (9) étant substantiellement perpendiculaire à la direction de déplacement de la tige tactile (5), caractérise par le fait que des moyens transmetteurs de déplacement (14) sont prévus entre l'élément d'actionnement (9) et la tige tactile (5), lesdits moyens transmetteurs de déplacement (14) présentant un point sensiblement neutre au voisinage de celle des positions extrêmes de l'élément d'actionnement (9) pour laquelle la tige tactile (5) occupe sa position en saillie.

2. Dispositif selon la revendication 1, caractérisé par le fait qu'il est prévu une butée (7) pour empêcher la déformation par courbure de l'élément d'actionnement (9) au delà de ladite position d'extrémité précitée.

3. Dispositif selon la revendication 1 ou 2, caractérisé par le fait que l'axe longitudinal de l'élément d'actionnement (9) est substantiellement parallèle à ladite surface de lecture (3).

4. Dispositif selon la revendication 1 ou 2, caractérisé par le fait que l'axe longitudinal de l'élément d'actionnement (9) est substantiellement perpen diculaire à ladite surface de lecture (3).

5. Dispositif selon la revendication 1 ou 2, caractérisé par le fait que lesdits moyens transmetteurs de déplacement (14) comprennent un élément élastique.

6. Dispositif selon la revendication 1 ou 2, caractérisé par le fait que lesdits moyens transmetteurs de déplacement (14) sont sous la forme d'un élément de liaison ayant ses extrémités (13, 15) reliées à l'élément d'actionnement (9) et à la tige tactile (5) respectivement, et monté à pivotement autour d'axes qui sont pratiquement perpendiculaires à la direction de déplacement de la tige tactile (5) et de l'élément d'actionnement (9).

7. Dispositif selon la revendication 6, caractérisé par le fait que ledit élément de liaison est sous la forme d'un ressort à fil (14) ayant des parties d'extrémités rectilignes parallèles (13, 15) reeques dans des paliers de pivotement (12, 16) de la tige tactile (5) et de l'élément d'actionnement (9) respectivement.

8. Dispositif selon la revendicaton 1 ou 2, caractérisé par le fait que les moyens transmetteurs de déplacement (14) sont sous la forme d'une surface de came (23) formée par la face inférieure (11) de la tige tactile (5), coopérant directement avec l'extrémité libre de l'élément d'actionnement (9), la forme de la surface de came étant choisie de façon à obtenir l'élasticité désirée à l'encontre de la pression de lecture appliquée aux tiges tactiles (5).

## Claims

1. Tactile reading device, comprising a reading surface (3) provided with openings (4) for a number of sensing rods (5) adapted to move reciprocally axially between a protruding position and a retracted position with respect to said surface, each one of which rods can be moved between said positions by means of an end part of an elongated actuating element (9) of which the other part is fixed, said actuating element (9) being adapted to move by curvature deformation perpendicularly to its longitudinal axis between two end positions by applying an actuating force thereto, the curvature direction of said actuating element (9) being substantially perpendicular to the displacement direction of the sensing rod (5), characterized by the fact that displacement transmitting means (14) are provided between the actuating element (9) and the sensing rod (5), said displacement transmitting means (14) presenting a substantially neutral point close to that of the end positions of the actuating element (9) for which the sensing rod (5) occupies its protruding position.

2. Device according to claim 1, characterized by the fact that an abutment (7) is provided to prevent the curvature deformation of the actuating element (9) beyond said end position.

3. Device according to claim 1 or 2, characterized by the fact that the longitudinal axis of the actuating element (9) is substantially parallel to said reading surface (3).

4. Device according to claim 1 or 2, characterized by the fact that the longitudinal axis of the actuating element (9) is substantially perpendicular to said reading surface (3).

5. Device according to claim 1 or 2, characterized by the fact that said displacement transmitting means (14) comprise an elastic element.

6. Device according to claim 1 or 2, characterized by the fact that said displacement transmitting means (14) are in the form of a connecting element having its ends (13,14) connected to the actuating element (9) and to the sensing rod (5), respectively, for pivoting about axes which are substantially perpendicular to the moving direction of the sensing rod (5) and of the actuating element (9).

7. Device according to claim 6, characterized by the fact that said actuating element is in the form of a wire spring (14) with parallel rectilinear end portions (13,15) which are received in pivoting bearings (12,16) of the sensing rod (5) and of the actuating element (9), respectively.

8. Device according to claim 1 or 2, characterized by the fact that said displacement transmitting means (14) are in the form of a cam surface (23) formed by the lower face (11) of the sensing rod (5) cooperating directly with the free end of the actuating element (9), the shape of the cam surface being so selected as to obtain the required elasticity to counteract the reading pressure applied on the sensing rods (5).

**Ansprüche**

1. Vorrichtung zum taktilen Lesen, die eine Leseoberfläche (3) aufweist, welche mit Offnungen (4) für eine bestimmte Anzahl taktiler Stäbe (5) versehen ist, die gemäss einer hin und her Bewegung zur axialen Verschiebung zwischen einer hervorstehenden Position und einer zurückgezogenen Position in bezug auf die besagte Fläche geeignet sind und deren jedes mittels eines Endes eines Betätigungselementes länglicher Form, dessen anderes Ende fixiert ist, zwischen den besagten Positionen verschoben werden kann, wobei sich das Betätigungselement (9) durch rechtwinklig zur Längsachse erfolgende Biegeverformung zwischen zwei Endpositionen durch die Anwendung einer Betätigungskraft verschiebt, wobei die Richtung der Biegeverformung des Betätigungselementes (9) in etwa rechtwinklig zu der Richtung der Verschiebung der taktilen Stäbe (5) verläuft,
**dadurch gekennzeichnet,**
dass zwischen dem Betätigungselement (9) und dem taktilen Stab (5) Mittel (14) zur Weiterleitung der Verschiebung vorgesehen sind, welche einen in etwa neutralen Punkt in der Nähe der Endposition des Bedienelementes (9) aufweisen, in der der taktile Stab (5) seine hervorstehende Position einnimmt.

2. Vorrichtung nach Anspruch 1,
dadurch gekennzeichnet,
dass ein Anschlag (7) vorgesehen ist, um die Biegeverformung des Betätigungselementes (9) über die vorgenannte Endposition hinaus zu verhindern.

3. Vorrichtung nach Anspruch 1 oder 2,
dadurch gekennzeichnet,
dass die Längsachse des Betätigungselementes (9) in etwa parallel zu der Leseoberfläche (3) verläuft.

4. Vorrichtung nach Anspruch 1 oder 2,
dadurch gekennzeichnet,
dass die Längsachse des Betätigungselementes (9) in etwa rechtwinklig zur Leseoberfläche (3) verläuft.

5. Vorrichtung nach Anspruch 1 oder 2,
dadurch gekennzeichnet,
dass die Mittel (14) zur Weiterleitung der Verschiebung ein elastisches Element aufweisen.

6. Vorrichtung nach Anspruch 1 oder 2,
dadurch gekennzeichnet,
dass die Mittel zur Weiterleitung der Verschiebung (14) die Form eines Verbindungselementes haben, dessen Enden (13, 15) mit dem Betätigungselement (9) und dem taktilen Stab (5) jeweils verbunden sind, und das schwenkbar zur Richtung der Verschiebung des taktilen Stabes (5) und des Betätigungselementes (9) etwa senkrecht liegende Achsen montiert ist.

7. Vorrichtung nach Anspruch 6,
dadurch gekennzeichnet,
dass das Verbindungselement die Form einer Drahtfeder (14) hat, deren geradlinige, parallele Endabschnitte (13), 15) von Schwenklagern (12, 16) des taktilen Stabs (5) bzw. des Betätigungselements (9) aufgenommen werden.

8. Vorrichtung nach Anspruch 1 oder 2,
dadurch gekennzeichnet,
dass die Mittel (14) zur Weiterleitung der Verschiebung in Form einer nockenartigen Oberfläche (23) an der unteren Stirnseite (11) der taktilen Stäbe (5) ausgebildet sind, die direkt mit dem freien Ende der Betätigungselemente (9) zusammenwirken, wobei die Form der nokkenartigen Oberfläche so gewählt ist, dass man die gewünschte Elastizität gegen den beim Lesen auf die taktilen Stäbe (5) angewen-deten Druck erhält.

FIG.1

FIG.3

FIG.2

FIG.4

FIG.5

FIG.7

FIG.6